(19) Europäisches Patentamt
European Patent Office
Office européen des brevets

(11) **EP 4 400 959 A1**

(12) **EUROPEAN PATENT APPLICATION**

(43) Date of publication:
**17.07.2024 Bulletin 2024/29**

(21) Application number: **23153429.8**

(22) Date of filing: **26.01.2023**

(51) International Patent Classification (IPC):
*G06F 3/0485* (2022.01)     *G06F 3/01* (2006.01)
*G06F 3/04812* (2022.01)    *G06F 3/04815* (2022.01)
*G06F 1/16* (2006.01)       *G06F 3/0483* (2013.01)
*G06F 1/26* (2006.01)       *H04M 1/04* (2006.01)
*H04M 1/72409* (2021.01)

(52) Cooperative Patent Classification (CPC):
**G06F 3/017; G06F 1/1632; G06F 1/1694;
G06F 1/266; G06F 3/011; G06F 3/0485;
H04M 1/04; H04M 1/724092;** H04M 1/72412;
H04M 1/72454

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.01.2023  EP 23151415
12.01.2023  EP 23151420
12.01.2023  EP 23151423**

(71) Applicant: **AMERIA AG
69124 Heidelberg (DE)**

(72) Inventors:
• **Seiler, Martin
79238 Ehrenkirchen (DE)**
• **Ensslen, Christian
70469 Stuttgart (DE)**
• **Hixon, Dennis
74931 Lobbach (DE)**
• **Schneider, Franziska
76275 Ettlingen (DE)**
• **Rothvoss Buchheimer, Maria
69214 Eppelheim (DE)**
• **Metter, Albrecht
69120 Heidelberg (DE)**

(74) Representative: **Best, Bastian
Bestpatent
Patentanwalt Bastian Best
Konrad-Zuse-Platz 8
81829 München (DE)**

(54) **TOUCHLESS USER INTERFACE OPERATING METHOD BASED ON AN ELECTRONIC DEVICE**

(57)     According to a first aspect of the present invention, a computer-implemented touchless user interface operating method is provided. The method may comprise presenting, using a display means of an electronic device, a scrollable scene to a user person. The scene may comprise a hidden portion that requires scrolling to become visible to the user person. The method may comprise observing, using at least one depth sensing device, a spatial input area being located essentially in front of the display means. The method may comprise capturing a position and movement of an input object that the user person uses for providing touchless user input within the spatial input area. The method may comprise displaying, using the display means, a hovering cursor being controlled based on the captured position and movement of the input object, wherein the hovering cursor hovers on a currently visible portion of the presented scene. The method may comprise performing a scrolling operation, using the display means, wherein the scrolling operation includes scrolling the scene in a scrolling direction by a scrolling distance when a scrolling condition is met. Whether the scrolling condition is met may be dependent on the position and movement of the hovering cursor.

**(Cont. next page)**

EP 4 400 959 A1

Fig. 3b

**Description**

**TECHNICAL FIELD**

The present invention generally relates to providing a touchless user interface, and more particularly to a touchless user interface operating method for providing user input, in particular scrolling commands, to an electronic device. Further, the present invention relates to an electronic device, in particular for use in said method. Further, the present invention relates to a system and to a data processing apparatus for carrying out the touchless user interface operating method. Further, the present invention relates to a computer program for carrying out the touchless user interface operating method.

**BACKGROUND**

Display means have nowadays become omnipresent in various areas of modern life, in particular in electronic devices which provide a user with a user interface to interact and/or control a presented, i.e., displayed, scene. Examples for electronic devices include computers, portable computers, convertible computers, laptops, netbooks, tablet devices, mobile devices, or the like. Said electronic devices may comprise physical buttons, such as a keyboard, volume button(s), on-off button(s), or the like. Additionally or alternatively, said electronic devices may comprise an display means screen being a touchscreen. Via the physical buttons and/or via the touchscreen, a user person may interact with the electronic device.

Electronic devices, as described above, are used in various situations, for example for gathering desired information by an online search, web browsing, reading e-books, reading newspapers, using applications which support the user in private or professional matters, communicating with other persons using text messengers and/or video conferencing tools and/or voice messaging tools and/or calling tools, or the like. Said electronic devices may also be connected to other, in particular larger, display screens, such as television screens in order to do presentations, lectures or the like.

In any of the above-mentioned applications of said electronic devices it may happen that the interaction using physical buttons and/or the touchscreen is not comfortable. For example, if the user person does not have clean hands and would like to keep the electronic device clean, but still wants or needs to use the electronic device immediately, it may be an uncomfortable situation. Also, if other user persons, apart from the owner of the electronic device, want to interact with the electronic device, the owner may feel more comfortable, if the other user persons do not touch the device. Further, if the user person of the electronic device is handicapped and is not able to fully interact with the electronic device in the provided manner via physical buttons and/or via a touchscreen, an inconvenient situation may occur. Existing solutions for this are mainly voice based interaction schemes but this does not satisfy the existing need to have an intuitive and accessible user interface to provide user input to said electronic device. Therefore, there is an effort to provide a touchless interaction between user persons and an electronic device. For a touchless interaction, it is necessary to redefine all required control commands so that users can still interact comfortably and intuitively. One of the major aspects of touchless gesture control that has not been satisfactorily solved so far is scrolling. Scrolling may be required in many of the above application scenarios, such as web browsing or reading e-books.

Therefore, there is a need to provide a method that fulfills at least partially the requirements of accessibility, ease of use and convenience of use, at the same time providing a user person with a positive user experience, in particular with respect to touchless scrolling.

It is therefore the technical problem underlying the present invention to provide an improved user interface operating method for electronic devices and thereby overcome the above-mentioned disadvantages of the prior art at least in part.

**SUMMARY OF INVENTION**

The problem is solved by the subject-matter defined in the independent claims. Advantageous modifications of embodiments of the invention are defined in the dependent claims as well as in the description and the figures.

According to a first aspect of the present invention, a touchless user interface operating method is provided. The method may be computer-implemented. The method may serve for controlling a scrolling behavior of content displayed on a display means of an electronic device.

The method may comprise presenting, or causing presentation of, preferably using a display means of an electronic device, a scrollable scene to a user person. The scene may comprise a hidden portion that requires scrolling to become visible to the user person.

The method may comprise observing, using at least one sensor of the electronic device, a touchless scrolling gesture of a user person. The touchless scrolling gesture may be observed when the user person moves an input object towards an edge of the display means.

As a specific realization of the above-mentioned observing set or independent thereof, the method may comprise observing, using at least one sensor, in particular at least one depth sensing device, a spatial input area being located essentially in front of the display means. The method may comprise capturing at least one of a position and movement of an input object. The input object is preferably an input object that the user person uses for providing touchless user input within the spatial input area. The method may comprise displaying, or causing display of, preferably using the display means, a hovering cursor. The hovering cursor may be controlled based on the captured position and/or movement of the input object. The hovering cursor may hover on a currently visible portion of the presented scene.

The method may comprise performing, or causing performance of, a scrolling operation, preferably in response to the observed touchless scrolling gesture. As a specific realization of this step, or independent thereof, the method may comprise, preferably using the display means that the scrolling operation may include scrolling the scene or content in a scrolling direction, preferably by a scrolling distance, preferably when a scrolling condition is met. Whether the scrolling condition is met may be dependent on the position and/or movement of the hovering cursor or position and/or movement of the input object relative to the display means.

The scrolling operation may be a one-time scrolling operation. The term one-time scrolling operation may be understood as a scrolling operation that has a starting point and an end point, i.e., no continuous scrolling is performed. In other words: scrolling stops, preferably automatically stops, after scrolling by the scrolling distance.

The term presenting a scrollable scene may be understood meaning displaying or providing a scrollable scene to a user person. The scrollable scene may be a scrollable content, e.g., a text of an image. The scrollable scene may comprise a displayed portion and a hidden portion, wherein the displayed portion of the scene is displayed by the display means of the electronic device such that the displayed portion of the scene is visible for the user person, while the hidden portion of the scene is not visible for the user person and requires scrolling to become visible. Of course, the hidden portion may have a plurality of parts, e.g., one part beyond the upper edge of the display means, one part beyond the lower part of the display means, one part beyond the left edge of the display means and/or one part beyond the right edge of the display means.

The term visible may be understood as visually perceptible for the user person. Therefore, the hidden portion may be located beyond edges of the display means and is therefore not visually perceptible for the user person. Of course, the skilled person understands that if a scrolling operation is performed in order to make visible hidden parts of the hidden portion, parts of the visible portion of the displayed scene will become hidden parts of the hidden portion.

The electronic device may be any kind of electronic device having a display means for displaying a scene to a user. Examples for an electronic device are mobile devices, tablet devices, laptops, convertible laptops, or the like.

The term display means may be understood to include any type of display means of an electronic device, here are several types of displays commonly used in smartphones and tablets, including: LCD (liquid crystal display), OLED (organic light-emitting diode), AMOLED (active-matrix OLED), IPS (in-plane switching), TFT (thin-film transistor), QHD (quad high-definition), Retina display (used by Apple in their devices). LCD and OLED displays are the most common types used in smartphones and tablets. OLED displays are known for their high contrast ratio and deep blacks, while LCD displays are known for their good color reproduction and wide viewing angles. AMOLED and IPS are technologies used in OLED and LCD displays respectively. TFT is a type of LCD used in some devices. QHD is a term used for displays with high resolution. Retina display is a term used by Apple for their high-resolution displays.

The display means may have a rectangular shape having an upper edge, a lower edge, a left edge and a right edge. The edges of the display means may not be understood as the framing of the electronic device or the framing of the display means, but the edges of the actual display means displaying a scene. Thus, during operation, the edges of the display means may correspond to the edges of the displayed visible content.

Throughout the present disclosure, the terms "upwards", "upper" and "up" may refer to the direction towards the top of the display means as viewed by the user person. The terms "downwards", "lower", "down" may refer to the direction towards the bottom of the display means as viewed by the user person. The terms "to the left" and "left" may refer to the direction towards the left side of the display means as viewed by the user person. The terms "to the right" and "right" may refer to the direction towards the right side of the display means as viewed by the user person. These definitions are based on the field of view and/or posture and/or gaze and/or orientation of the user person and not on the direction of earth gravity. For example, the user person may determine in the settings of an electronic device that the orientation of the displayed scene should change depending on the field of gravity. Such setting makes sense, e.g., if the user person if standing or sitting upright. Alternatively, the user person may determine that the orientation of the displayed scene should be fixed. Such setting makes sense if the user person is not positioned upright, e.g., lying on the bed while interaction with the electronic device. Thus, the above-mentioned terms are preferably depending on the user person during interaction.

The input object may be any kind of suitable input object such as a hand or a finger of a user person, a dedicated input device which may for example be a pen or a spherical device. In particular, the user person may use the user person's index finger to intuitively provide user input. The term position and/or movement of an input object may be understood as the position and/or movement relative to the electronic device, in particular relative to the display means, in particular relative to the at least one sensor. Position and movement may include the orientation of the input object, e.g., the curvature of an index finger pointing at a specific location of the scene.

The at least one sensor may be a sensor device, a sensor assembly or a sensor array which is able to capture the relevant information in order to translate a movement and/or position and/or orientation of an input object, in particular of a user's hand, into control commands. In particular, depth information may be capturable by the sensor. Thus, the sensor may be a depth sensing device. It may be placed such as to observe the spatial input area. In a preferred embodiment, at least two sensors are provided and placed such as to observe the spatial input area. Preferably, if at least two sensors are used, the sensors may be arranged having an overlap in their field of view, each at least partially covering the spatial input area.

The sensor(s), in particular the depth sensing device(s), may preferably be a depth camera(s). An example for a depth camera is the Intel RealSense depth camera. The at least one sensor may, as described above, be part of the electronic device or be integrated in the electronic device.

The term spatial input area may be understood as comprising or being a virtual plane defined in space which virtual plane may form a virtual touchpad which does not require physical touch during a user interaction. Alternatively or additionally, the term spatial input area may be understood as a space within which user interaction is captured, as described above. The spatial input area, preferably the virtual plane, may be located essentially in front of the display means, i.e., essentially parallel to the scene displayed by the display means of the electronic device, preferably essentially parallel to the display means. Alternatively or additionally, the spatial input area, preferably the virtual plane, may be essentially perpendicular to the display means of the electronic device. Alternatively or additionally, the spatial input area, preferably the virtual plane, may be tilted, i.e., inclined, with respect to the scene displayed by the display means, preferably tilted, i.e., inclined, with respect to the display means. In case if the spatial input area, preferably the virtual plane, is tilted with respect to the scene and/or the display means, the spatial input area may have a spatial orientation that is particularly convenient for the user person for providing user input. It may be provided that the user person is provided with a control option to adjust the spatial orientation of the spatial input area, e.g., by choosing between possible orientations.

It may be provided that the spatial input area and captured user input which is performed within the spatial input area is mapped to the presented, i.e., displayed, scene. The spatial input area may be defined to be a virtual plane in space. The mapping may follow one or more rules.

In a first example, the spatial input area may have essentially the same width-to-height ratio as the presented scene, and preferably as the display means. Described in formulas, the width-to-height ratio of the spatial input area is r and the width-to-height ratio of the scene and/or display means is R, with r = R. In this example, the spatial input area may be mapped to the presented scene and/or to the display means essentially without changing the width-to-height ratio. Borders of the spatial input area may be mapped to respective edges of the display means, accordingly.

In a second example, the spatial input area may have a different width-to-height ratio than the presented scene, and preferably as the display means. Described in formulas, the width-to-height ratio of the spatial input area is r and the width-to-height ratio of the scene and/or display means is R, with r ≠ R. In this example, mapping may follow underlying mapping rules which fit the different width-to-height ratios to one another in order to provide an optimum user experience. Borders of the spatial input area may be mapped to respective edges of the display means, accordingly.

A hovering cursor, also known as a hover pointer or mouse pointer, may be understood as a cursor that is displayed on the display means when the user person uses the input object for interaction within the spatial input area. It is used to provide visual feedback to the user such that the user knows the current location where he is pointing at using the input object. The hovering cursor may hover over the presented scene while overlaying the currently visible portion of the scene. The position and movement of the hovering cursor may essentially correspond to the captured position and movement of the input object that the user person uses.

Experience and testing have shown that the intuitively designed touchless user interface operating method according to the present invention provides an appealing and easy to learn user experience, in particular with regard to the scrolling capabilities. The above-mentioned scrolling capabilities allow the user to use touchless input for intended interaction, while for scrolling, essentially no experience is needed.

Due to the scrolling operation which does not run continuously, but stops after scrolling a certain scrolling distance, the user person can provide further touchless user input while the hovering cursor remains essentially near the location where the scrolling condition was fulfilled, without unwanted further scrolling. For example, if the scrolling condition is fulfilled if the user person moves the hovering cursor towards an edge of the display means, the user person can perform further touchless user input near or directly at the respective edge after a scrolling operation, without causing unintended further scrolling. In order to scroll further, the user person may have to move the input object away from the edge and then move it back towards the edge, i.e., the scrolling condition must be briefly unfulfilled between several successive scrolling operations. Examples for further touchless user inputs may be click gesture inputs or zoom gesture inputs. Thus, the convenience of use and the user experience is enhanced.

Further, due to the touchless interaction capabilities, the requirement of touching the electronic device, i.e.,

using physical buttons and/or a touchscreen, falls apart. Instead, a touchless user interaction is possible. This is particularly advantageous in various situations when an interaction using physical buttons and/or a touchscreen is not comfortable. For example, if the user person does not have clean hands and would like to keep the electronic device clean, but still wants or needs to use the electronic device immediately, a touchless interaction may be desired. Also, if other user persons, apart from the owner of the electronic device, want to interact with the electronic device, the owner may feel more comfortable, if the other user persons do not touch the device. Further, if the user person of the electronic device is handicapped and is not able to fully interact with the electronic device in the provided manner via physical buttons and/or via a touchscreen, touchless interaction may make the electronic device accessible in an advantageous and convenient manner.

Recognizing touchless user input based on orientation and/or position and/or movement of the input object, e.g., a user person's hand, is particularly smooth and can be performed continuously without interruptions, jumps or leaps, if the input object is detected and successively tracked during a user interaction. In other words, an input object may be detected and the step of capturing user input may be locked to the detected input object. Thus, during an interaction of the user person, the input object or hand may move around and change continuously its position which may occasionally result in control interruptions and thus negatively affect the user experience. By detecting and tracking the input object, such interruptions are avoided for the benefit of the user experience. Once the input object is detected, losing or confusing the input object with other body parts or objects is efficiently avoided.

For detecting the input object and locking the input object for the purpose of capturing user input, a locking condition may be required to be met. Such locking condition may require the user person to perform a specific user input, such as a gesture, successive gestures, pressing a button, input voice commands and/or the like. For example, a detected hand of a user person may be initially displayed on the display means before the locking condition is met, so that the user person can easily see and decide whether the correct hand which is intended for interaction is detected and locked. Based on the initially displayed hand, the user person may perform a gesture, for example a double click gesture moving the hand back and forth, if such gesture is set to be the locking condition. After locking the input object or the hand, the at least one sensor, in particular depth sensing device, may seamlessly continue tracking the input object upon re-entering the input object into the spatial input area, after the input object was previously moved out of the spatial input area. This can be realized by detecting and processing at least partially the shape of the input object or by detecting and processing one or more characteristics of the user person's input object, e.g., hand.

It may be provided that the user person can choose between different locking conditions and/or define individual locking conditions. For example, old persons may not be able to perform certain gestures, such as fast double click gestures, due to handicaps. By the individualization option with respect to the locking condition, the usability is enhanced.

It may be provided that the scrolling distance and the scrolling direction, and preferably a scrolling speed, are defined in a scrolling scheme. It may be provided that the control scheme is at least partially predefined.

It may be further provided that the scrolling scheme is at least partially adjustable, in particular, one or more of the following parameters being adjustable: scrolling distance, scrolling speed, scrolling direction.

This feature allows for the customization of scrolling behavior by defining the distance, direction, and/or speed of scrolling in a scrolling scheme. This allows users to adjust the scrolling to their preferred settings and make the scrolling more comfortable and efficient.

Optionally, at least two control schemes are predefined and available for the user person to choose from. Alternatively or additionally, the control scheme may at least partially be adjustable by the user person. By that, the control scheme can be tailored to the user person's needs, preferences and physical abilities, for example if the user person is handicapped. This means that users can customize the scrolling behavior to their preferences and needs, making the scrolling experience more comfortable and efficient. The scrolling scheme is at least partially adjustable, meaning that not all parameters may be adjustable, but one or more of them can be adjusted to meet the user's requirements. This increases the versatility of the present invention and creates a wide range of possible usage options.

It may be provided that the display means comprises an upper edge and a lower edge beyond each of which parts of the hidden portion may be located, wherein scrolling conditions and respective scrolling directions of the scrolling operation are defined as follows:

if the hovering cursor is moved upwards such that the hovering cursor collides with the upper edge of the display means, the scene is scrolled down by the scrolling distance such that a part of the hidden portion beyond the upper edge becomes visible to the user person, and

if the hovering cursor is moved downwards such that the hovering cursor collides with the lower edge of the display means, the scene is scrolled up by the scrolling distance such that a part of the hidden portion beyond the lower edge becomes visible to the user person;
or

if the hovering cursor is moved upwards such that the hovering cursor collides with the upper edge of the display means, the scene is scrolled up by the scrolling distance such that a part of the hidden portion beyond the lower edge becomes visible to the user person, and

if the hovering cursor is moved downwards such that the hovering cursor collides with the lower edge of the display means, the scene is scrolled down by the scrolling distance such that a part of the hidden portion beyond the upper edge becomes visible to the user person.

The above-described alternatives may be understood as alternative control schemes and refer to the capabilities of scrolling up and down in order to make visible hidden parts of the hidden portion beyond the upper edge and beyond the lower edge of the display means. In the first above-mentioned alternative, the control scheme is configured in a standard way for scrolling up and down, i.e., hovering the hovering cursor upwards makes visible hidden parts of the hidden portion beyond the upper edge, and hovering the hovering cursor downwards makes visible hidden parts of the hidden portion beyond the lower edge. In the second above-mentioned alternative, the control scheme is configured in an inverted way for scrolling up and down, i.e., hovering the hovering cursor upwards makes visible hidden parts of the hidden portion beyond the lower edge, and hovering the hovering cursor downwards makes visible hidden parts of the hidden portion beyond the upper edge. It depends on user preferences, which control scheme is in particular preferred. Thus, the user may be provided with an option to switch between the two above-mentioned alternatives.

The above formulation which is "if the hovering cursor is moved upwards/downwards such that the hovering cursor collides with the upper/lower edge of the display means" may be understood being a scrolling condition that has to be fulfilled in order to perform a scrolling operation, i.e., in order to trigger scrolling, i.e., in order to cause the electronic device and the display means to perform a scrolling operation. Accordingly, the scrolling condition, speaking generally, requires that the hovering cursor hits a respective edge of the display means. Each of the above-mentioned scrolling conditions may be allocated or linked to a specific scrolling direction, which becomes apparent which regard to the above formulation which is "the scene is scrolled upwards/downwards by the scrolling distance". This allocation or linkage may also be part of the scrolling scheme.

It may be provided that the display means comprises a left edge and a right edge beyond each of which parts of the hidden portion may be located, wherein scrolling conditions and respective scrolling directions of the scrolling operation are defined as follows:

if the hovering cursor is moved to the left such that the hovering cursor collides with the left edge of the display means, the scene is scrolled to the right by the scrolling distance such that a part of the hidden portion beyond the left edge becomes visible to the user person, and

if the hovering cursor is moved to the right such that the hovering cursor collides with the right edge of the display means, the scene is scrolled to the left by the scrolling distance such that a part of the hidden portion beyond the right edge becomes visible to the user person;
or

if the hovering cursor is moved to the left such that the hovering cursor collides with the left edge of the display means, the scene is scrolled to the left by the scrolling distance such that a part of the hidden portion beyond the right edge becomes visible to the user person, and

if the hovering cursor is moved to the right such that the hovering cursor collides with the right edge of the display means, the scene is scrolled to the right by the scrolling distance such that a part of the hidden portion beyond the left edge becomes visible to the user person.

The above-described alternatives may be understood as alternative control schemes and refer to the capabilities of scrolling to the left and to the right in order to make visible hidden parts of the hidden portion beyond the left edge and beyond the right edge of the display means. In the first above-mentioned alternative, the control scheme is configured in a standard way for scrolling to the left and to the right, i.e., hovering the hovering cursor to the left makes visible hidden parts of the hidden portion beyond the left edge, and hovering the hovering cursor to the right makes visible hidden parts of the hidden portion beyond the right edge. In the second above-mentioned alternative, the control scheme is configured in an inverted way for scrolling to the left and to the right, i.e., hovering the hovering cursor to the left makes visible hidden parts of the hidden portion beyond the right edge, and hovering the hovering cursor to the right makes visible hidden parts of the hidden portion beyond the left edge. It depends on user preferences, which control scheme is in particular preferred. Thus, the user may be provided with an option to switch between the two above-mentioned alternatives.

The above formulation which is "if the hovering cursor is moved to the left/right such that the hovering cursor collides with the left/right edge of the display means" may be understood being a scrolling condition that has to be fulfilled in order to perform a scrolling operation, i.e., in order to trigger scrolling, i.e., in order to cause the electronic device and the display means to perform a scrolling operation. Accordingly, the scrolling condition, speaking generally, requires that the hovering cursor hits a respective edge of the display means. Each of the above-mentioned scrolling conditions may be allocated or linked to a specific scrolling direction, which becomes apparent which regard to the above formulation which is "the scene is scrolled to the left/right by the scrolling distance". This allocation or linkage may also be part of the scrolling scheme.

It may be provided that the display means comprises an upper edge and a lower edge beyond each of which parts of the hidden portion may be located, wherein scrolling conditions and respective scrolling directions of the scrolling operation are defined as follows:

if the hovering cursor is moved upwards such that the hovering cursor enters an upper scrolling zone which is located adjacent to the upper edge of the display means, the scene is scrolled down by the scrolling distance such that a part of the hidden portion beyond the upper edge becomes visible to the user person, and

if the hovering cursor is moved downwards such that the hovering cursor enters a lower scrolling zone which is located adjacent to the lower edge of the display means, the scene is scrolled up by the scrolling distance such that a part of the hidden portion beyond the lower edge becomes visible to the user person;
or

if the hovering cursor is moved upwards such that the hovering cursor enters an upper scrolling zone which is located adjacent to the upper edge of the display means, the scene is scrolled up by the scrolling distance such that a part of the hidden portion beyond the lower edge becomes visible to the user person, and

if the hovering cursor is moved downwards such that the hovering cursor enters a lower scrolling zone which is located adjacent to the lower edge of the display means, the scene is scrolled down by the scrolling distance such that a part of the hidden portion beyond the upper edge becomes visible to the user person.

The above-described alternatives may be understood as alternative control schemes and refer to the capabilities of scrolling up and down in order to make visible hidden parts of the hidden portion beyond the upper edge and beyond the lower edge of the display means. In the first above-mentioned alternative, the control scheme is configured in a standard way for scrolling up and down, i.e., hovering the hovering cursor upwards makes visible hidden parts of the hidden portion beyond the upper edge, and hovering the hovering cursor downwards makes visible hidden parts of the hidden portion beyond the lower edge. In the second above-mentioned alternative, the control scheme is configured in an inverted way for scrolling up and down, i.e., hovering the hovering cursor upwards makes visible hidden parts of the hidden portion beyond the lower edge, and hovering the hovering cursor downwards makes visible hidden parts of the hidden portion beyond the upper edge. It depends on user preferences, which control scheme is in particular preferred. Thus, the user may be provided with an option to switch between the two above-mentioned alternatives.

The above formulation which is "if the hovering cursor is moved upwards/downwards such that the hovering cursor enters an upper/lower scrolling zone which is located adjacent to the upper/lower edge of the display means" may be understood being a scrolling condition that has to be fulfilled in order to perform a scrolling operation, i.e., in order to trigger scrolling, i.e., in order to cause the electronic device and the display means to perform a scrolling operation. Accordingly, the scrolling condition, speaking generally, requires that the hovering cursor enters a respective scrolling zone adjacent to a respective edge of the display means. Each of the above-mentioned scrolling conditions may be allocated or linked to a specific scrolling direction, which becomes apparent which regard to the above formulation which is "the scene is scrolled upwards/downwards by the scrolling distance". This allocation or linkage may also be part of the scrolling scheme.

It may be provided that the display means comprises a left edge and a right edge beyond each of which parts of the hidden portion may be located, wherein scrolling conditions and respective scrolling directions of the scrolling operation are defined as follows:

if the hovering cursor is moved to the left such that the hovering cursor enters a left scrolling zone which is located adjacent to the left edge of the display means, the scene is scrolled to the right by the scrolling distance such that a part of the hidden portion beyond the left edge becomes visible to the user person, and

if the hovering cursor is moved to the right such that the hovering cursor enters a right scrolling zone which is located adjacent to the right edge of the display means, the scene is scrolled to the left by the scrolling distance such that a part of the hidden portion beyond the right edge becomes visible to the user person;
or

if the hovering cursor is moved to the left such that the hovering cursor enters a left scrolling zone which is located adjacent to the left edge of the display means, the scene is scrolled to the left by the scrolling distance such that a part of the hidden portion beyond the right edge becomes visible to the user person, and

if the hovering cursor is moved to the right such that the hovering cursor enters a right scrolling zone which is located adjacent to the right edge of the display means, the scene is scrolled to the right by the scrolling distance such that a part of the hidden portion beyond the left edge becomes visible to the user person.

The above-described alternatives may be understood as alternative control schemes and refer to the capabilities of scrolling to the left and to the right in order to make visible hidden parts of the hidden portion beyond the left edge and beyond the right edge of the display means. In the first above-mentioned alternative, the control scheme is configured in a standard way for scrolling to the left and to the right, i.e., hovering the hovering cursor to the left makes visible hidden parts of the hidden portion beyond the left edge, and hovering the hovering cursor to the right makes visible hidden parts of the hidden portion beyond the right edge. In the second above-mentioned alternative, the control scheme is configured in an inverted way for scrolling to the left and to the right, i.e., hovering the hovering cursor to the left makes visible hidden parts of the hidden portion beyond the right edge, and hovering the hovering cursor to the right makes visible hidden parts of the hidden portion beyond the left edge. It depends on user preferences, which control scheme is in particular preferred. Thus, the user may be provided with an option to switch between the two above-mentioned alternatives.

The above formulation which is "if the hovering cursor is moved to the left/right such that the hovering cursor enters a left/right scrolling zone which is located adjacent to the left/right edge of the display means" may be understood being a scrolling condition that has to be fulfilled in order to perform a scrolling operation, i.e., in order to trigger scrolling, i.e., in order to cause the electronic device and the display means to perform a scrolling operation. Accordingly, the scrolling condition, speaking generally, requires that the hovering cursor enters a respective scrolling zone adjacent to a respective edge of the display means. Each of the above-mentioned scrolling conditions may be allocated or linked to a specific scrolling direction, which becomes apparent which regard to the above formulation which is "the scene is scrolled to the left/right by the scrolling distance". This allocation or linkage may also be part of the scrolling scheme.

It may be further provided that each scrolling zone is defined as an area extending parallel to its adjacent edge, while having a predetermined thickness in a direction orthogonal to its respective edge, optionally the thickness being not more than 2 cm, preferably not more than 1.5 cm, preferably not more than 1 cm, preferably equal to 1 cm, and/or the thickness being not more than 12 % of the length of the shortest edge of the display means, preferably not more than 9 % of the length of the shortest edge of the display means, preferably not more than 6 % of the length of the shortest edge of the display means, preferably equal to 6 % of the length of the shortest edge of the display means.

Tests and experiments have shown that it is important to define the thickness of the scrolling zone appropriately so that a consistent and predictable scrolling behavior is provided for user persons. In particular, it is important to avoid inadvertently triggering scrolling that was actually undesired. If the scrolling zone is too thick, a user person may hover the hovering cursor in the scrolling zone, but actually wants to make another user input and does not intend to scroll. If the thickness of the scrolling zone is too small, it can happen that user persons want to scroll, but are surprised that the scrolling is not triggered, although the hovering cursor is hovered close to a respective edge of the display means. The above-mentioned ranges for the thickness of the scrolling zone have proven to be particularly convenient for most user persons.

It may be provided that a configuration option is provided by the electronic device to adjust the scrolling direction according to user preferences, in particular to invert the scrolling direction.

It may be provided that scrolling stops after the scrolling distance when performing the scrolling operation, wherein for performing a further scrolling operation, a ready-to-scroll condition must be met, wherein the ready-to-scroll condition includes that the respective scrolling condition is temporarily not fulfilled between two successive scrolling operations, preferably the ready-to-scroll condition includes that the hovering pointer leaves the respective edge and/or leaves the respective scrolling zone, optionally for a predefined period of time in which scrolling is blocked.

This feature advantageously allows preventing accidental or unintentional scrolling by requiring the user person to actively initiate each scrolling operation. Further, it avoids confusion and disorientation for user persons by eliminating continuous scrolling. Further, the overall control of the user person over the scrolling operation is improves. Further, it may help to avoid accidental scrolling allowing the user to have a more controlled scrolling experience. Further, it can also help to provide a clear indication to the user person that the scrolling, i.e., the scrolling distance, has reached its end and a new scrolling operation can be performed.

It may be provided that the scrolling distance for scrolling upwards and/or downwards is set between 40 % and 50 % of the height of the display means, and optionally wherein the scrolling distance for scrolling to the left and/or scrolling to the right is set between 40 % and 50 % of the width of the display means.

Tests and experiments have shown that it is important to define the scrolling distance such that a balance between scrolling distance and the amount of content visible on the screen at a given time is provided. The above-mentioned scrolling distances have proven to be particularly convenient for most user persons.

Scrolling distance may be configured to dynamically increase sequentially if successive scrolling operations are performed shortly one after another, for example wherein less than 5 seconds, preferably less than 4 seconds, preferably less than 3 seconds, preferably less than 2 seconds, preferably less than 1 second, is between sequentially performed scrolling operations. The scrolling distance may, e.g., increase by 5 %-steps each time another scrolling operation is performed. The steps may, instead of 5 %-steps, be 10 %-steps, 15 %-steps, 20 %-steps, 30%-steps, 40 %-steps or 50 % steps.

Based on dynamically increasing scrolling distance, the user person is provided with a fast-scrolling option. This option enhances the user experience and the comfort of use.

It may be provided that a scrolling speed is defined to be lower than 2 seconds, preferably lower than 1.5 seconds, preferably lower than 1 second, preferably equal to 0.8 seconds. The scrolling speed, given in seconds, may be the time in which the scrolling operation is completed, i.e., scrolling by the scrolling distance.

It may be provided that the at least one sensor being a depth sensing device is a depth camera.

According to a second aspect of the present invention, an electronic device, preferably an electronic user device or a handheld electronic device, such as a mobile device or a smartphone or a tablet device or a laptop device is provided. The electronic device may comprise at least one sensor, preferably at least two sensors, and wherein the electronic device is configured to perform a method according to any aspect of the present invention disclosed herein.

According to a third aspect of the present invention, a system or data processing apparatus is provided, comprising means for carrying out the method according to any aspect of the present invention disclosed herein.

According to a fourth aspect of the present invention, a computer program or a computer-readable medium is provided, having stored thereon a computer program, the computer program comprising instructions which, when the program is executed by a computer, cause the computer to carry out the method according to any aspect of the present invention disclosed herein.

All technical implementation details and advantages described with respect to a particular aspect of the present invention are self-evidently mutatis mutandis applicable for all other aspects of the present invention.

## BRIEF DESCRIPTION OF THE DRAWINGS

The disclosure may be better understood by reference to the following drawings:

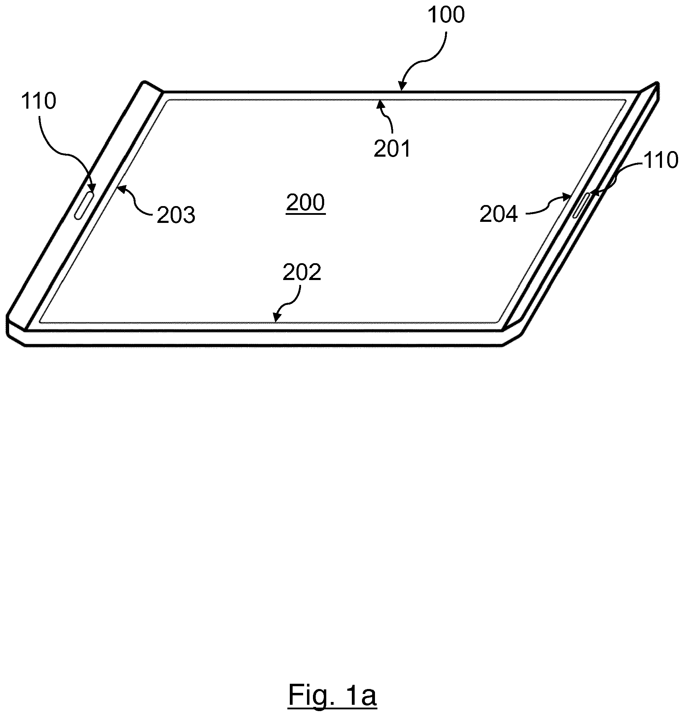

Fig. 1a:    A first prototype illustration of an electronic device for providing a touchless user interface according to embodiments of the present invention.

Fig. 1 b:    A second prototype illustration of an electronic device for providing a touchless user interface according to embodiments of the present invention.

Fig. 1c:    A third prototype illustration of an electronic device for providing a touchless user interface according to embodiments of the present invention.

Fig. 2a:    A first photo of an experimental setup to provide a touchless user interface for an electronic device showing a hovering cursor according to embodiments of the present invention.

Fig. 2b:    A second photo of an experimental setup to provide a touchless user interface for an electronic device showing a hovering cursor according to embodiments of the present invention.

Fig. 3a:    A first photo of an experimental setup to provide a touchless user interface for an electronic device showing a situation in which a scrolling condition is fulfilled according to embodiments of the present invention.

Fig. 3b:    A second photo of an experimental setup to provide a touchless user interface for an electronic device showing a situation in which a scrolling condition is fulfilled according to embodiments of the present invention.

Fig. 4:    A photo of a depth sensing device in an experimental setup to provide a touchless user interface for an electronic device according to embodiments of the present invention.

## DETAILED DESCRIPTION

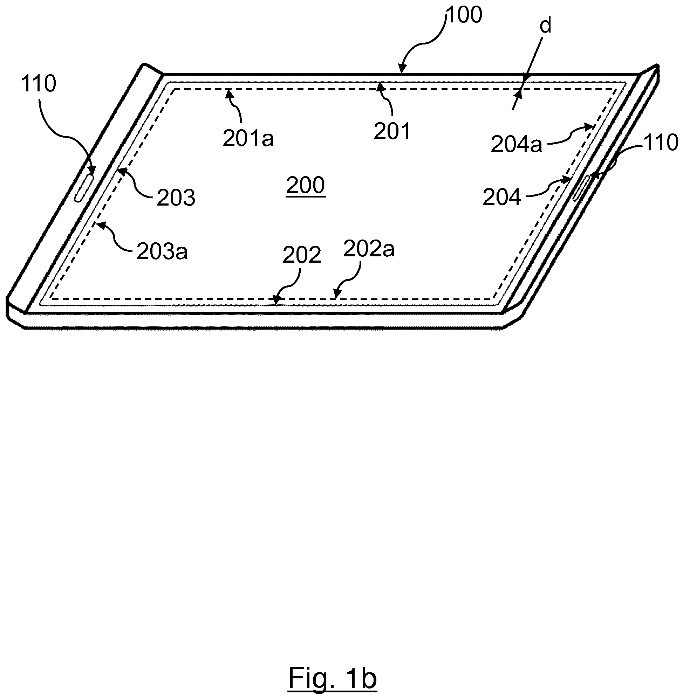

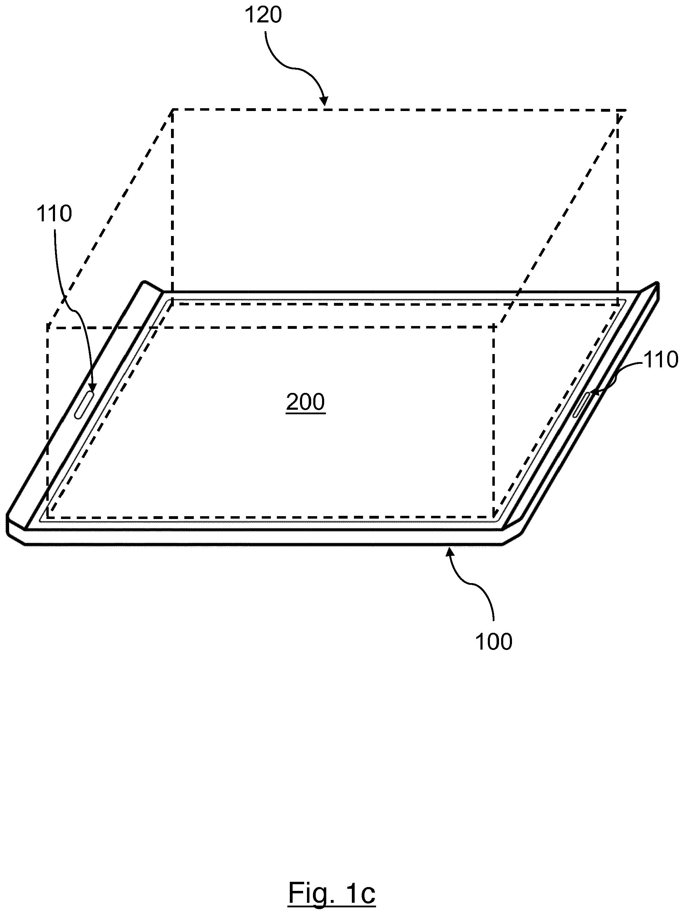

Figures 1a, 1b and 1c are prototype illustrations of an electronic device 100 for providing a touchless user interface according to embodiments of the present invention. As illustrated in figure 1a, the electronic device 100 comprises two sensors being depth sensing devices 110 which are integrated in the frame of the electronic device 100. The depth sensing devices 110 observe a spatial input area 120 (not shown). In order to have a better angle of view, the electronic device 100 is designed to hold the depth sensing devices 110 in a tilted manner with respect to the display means 200 of the electronic device 100. The electronic device 100 comprises a display means 200, wherein the display means 200 comprises an upper edge 201, a lower edge 202, a left edge 203 and a right edge 204.

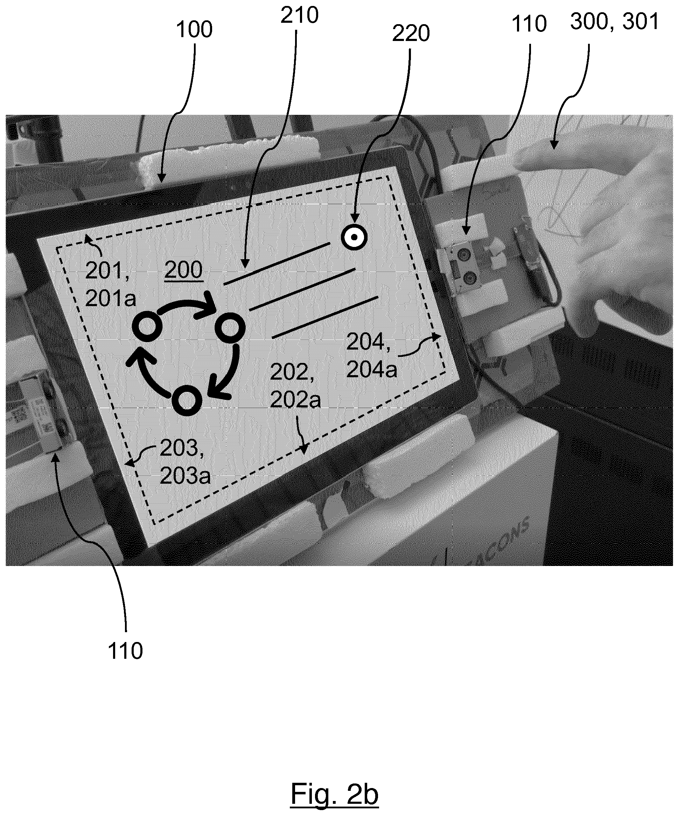

In figure 2b, further to figure 1a, a dotted line is illustrated indicating scrolling zones 201a, 202a, 203a, 204a. The upper scrolling zone 201a belongs to the upper edge 201 and is located adjacent to the upper edge 201. The lower scrolling zone 202a belongs to the lower edge 202 and is located adjacent to the lower edge 202. The left scrolling zone 203a belongs to the left edge 203 and is located adjacent to the left edge 203. The right scrolling zone 204a belongs to the right edge 204 and is located adjacent to the right edge 204. The scrolling zones may have a thickness d.

In figure 1c, further to figures 1a and 1b, a spatial input area 120 is illustrated being essentially located in front of the display means 200 and being observes by the sensors being depth sensing devices 110 of the electronic device 100.

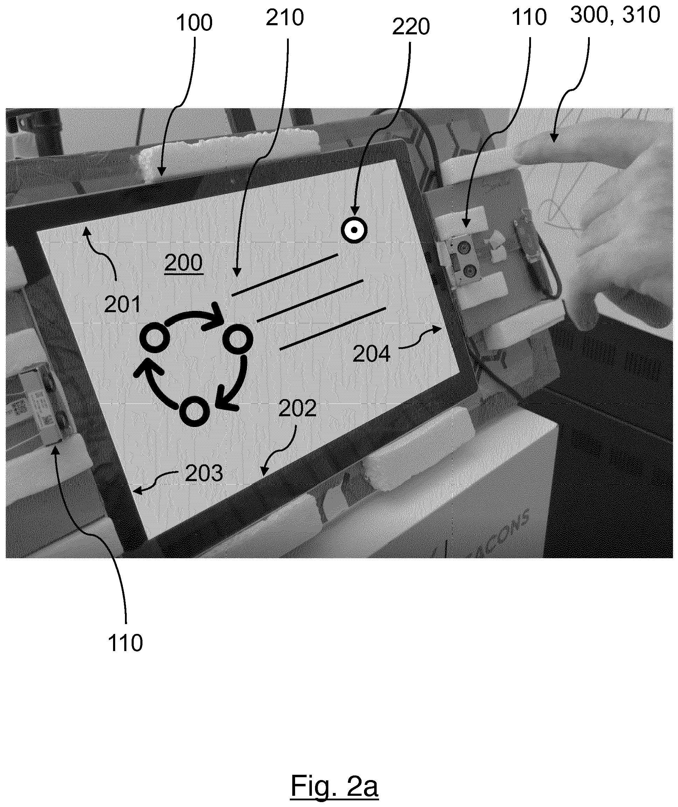

Figures 2a and 2b show photos of an experimental setup comprising an electronic device 100 comprising two depth cameras 110 and a display means 200. The display means 200 presents, i.e., displays, a scrollable scene 210 to a user person 300. The user person 300 is performing touchless interaction using his hand, in particular his index finger, as an input object 301. Based on said touchless interaction, i.e., the position and movement of the user's hand, a hovering cursor 220 is displayed which hovers over the scene 210. Further, the display means 200 comprises an upper edge 201, a lower edge 202, a left edge 203 and a right edge 204. In figure 2b, further to figure 2a, the display means 200 comprises scrolling zones 201a, 202a, 203a, 204a. The upper scrolling zone 201a belongs to the upper edge 201 and is located adjacent to the upper edge 201. The lower scrolling zone 202a belongs to the lower edge 202 and is located adjacent to the lower edge 202. The left scrolling zone 203a belongs to the left edge 203 and is located adjacent to the left edge 203. The right scrolling zone 204a belongs to the right edge 204 and is located adjacent to the right edge 204.

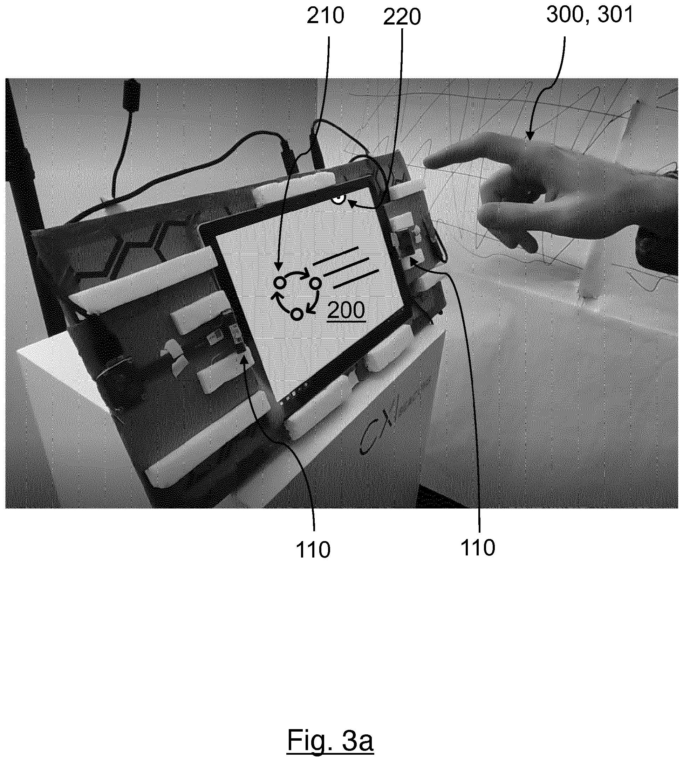

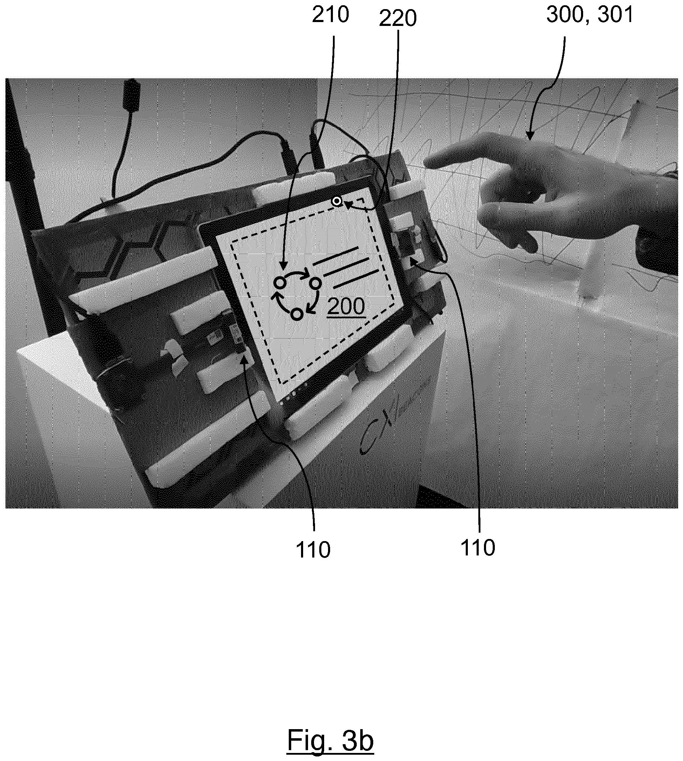

Figures 3a and 3b show, similar to figures 2a and 2b, photos of an experimental setup. Different to figures 2a and 2b, in figures 3a and 3b, the hovering cursor 220 is in a position where a scrolling operation is performed or triggered due to the fulfilment of a scrolling condition.

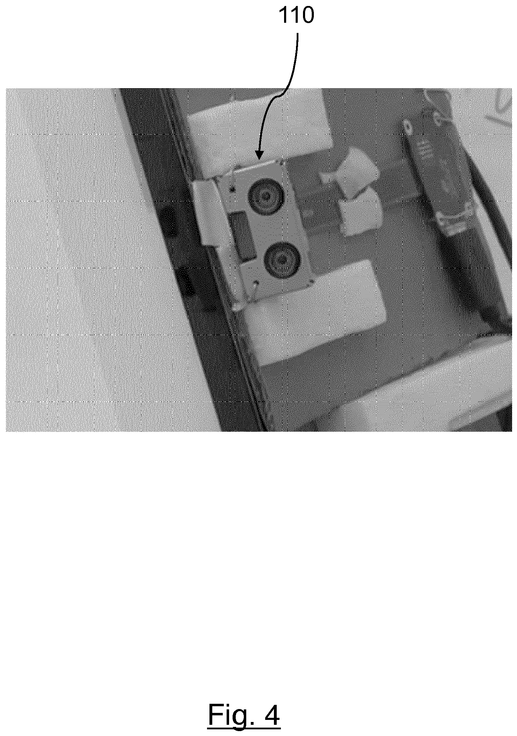

Figure 4 shows a zoomed-in photo of a sensor being a depth sensing device 110 according to embodiments of the present invention.

In the following, parts of the present invention are described in different words which the skilled person will understand in the context of the above disclosure:

The method according to the present invention may have a number of configurable parameters. The parameters may be fine-tuned for browsing regular websites on a Surface 9 tablet. The tested websites were wikipedia, netflix, youtube, thekitchn.com. The parameters can be fine-tuned further for a new hardware or use cases. The programming element SwipePaddingMeters is a parameter in meters with default value of 0.01. This is the padding from the edge of the screen on the top and bottom hovering over which leads to scroll. Thus, the padding may be understood as a scrolling zone. The programming element SwipeLengthInSeconds is a parameter in seconds with default value of 0.8. This is the speed of the scrolling initiated, e.g., scrolling a page. The programming element SwipeDistancePercents has a default value of 0.5 which equals to 50 %. This is the distance between the points where scrolling starts and ends in percent of the screen size. Thus, this may be understood as the scrolling distance. The scrolling distance may be defined for example with respect to the middle of the screen, i.e., a displayed scene displayed by the display means. The value of 0.5 means that one scrolling operation scrolls half of the displayed portion of the scene. Scrolling may be performed by simulating touch input in the center of the screen with a virtual touch sliding upwards of downwards for scrolling down and up, respectively, as it is common on touched-based devices. Scrolling is not infinite. Since the user triggered the scrolling, the program scrolls the scene only a predefined scrolling distance. See "SwipeDistancePercents" parameter above. The algorithm has two states, namely, hovering and scrolling. While hovering, the program checks if the finger reached either top or the bottom of the screen based on the "SwipePaddingMeters" parameter. If the finger reached top or the bottom, the program checks if it is ready to do a new scrolling operation and then switches to a scrolling state if it is ready. It is ready to do a new scrolling only if this is the first time the user scrolls or since the last scrolling operation the user has removed his finger from the top or the bottom of the screen. So, to scroll a long page, the user has to enter and leave the top or bottom area of the screen multiple times. This is done to enable the user person to use the top and the bottom of the screen for clicks or other input. So, if the user hovers over the top or bottom, the program scrolls only a little bit of the scene and user person can stay in the scrolling zone as long as the user person needs to make a click or a different input. While being in scrolling state, the program calculates two vertical points in the middle of the screen using "SwipeDistancePercents" parameter. The points are calculated relative to the screen height as follows:

$$topPoint = new\ Vector2(horizontalOffset, swipeDistancePercents\ /\ 2f * screenHeight);$$

$$bottomPoint = new\ Vector2(horizontalOffset, -swipeDistancePercents\ /\ 2f * screenHeight);$$

(the coordinate system origin is in the middle of the screen)

Then, with the speed defined by "SwipeLengthInSeconds" parameter, the simulation of touch input is performed with linear velocity sliding from one point to another (depending on whether it was a scroll up or down gesture).

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

## REFERENCE SIGNS

| | |
|---|---|
| 100 | electronic device |
| 110 | depth sensing device |
| 120 | spatial input area |
| 200 | display means |

| 201 | upper edge |
| 201a | upper scrolling zone |
| 202 | lower edge |
| 202a | lower scrolling zone |
| 203 | left edge |
| 203a | left scrolling zone |
| 204 | right edge |
| 204a | right scrolling zone |
| 210 | scene |
| 220 | hovering cursor |
| 300 | user person |
| 301 | input object |
| d | thickness |

**Claims**

1.  A computer-implemented touchless user interface operating method, the method comprising:

    presenting, using a display means (200) of an electronic device (100), a scrollable scene (210) to a user person (300), wherein the scene (210) comprises a hidden portion that requires scrolling to become visible to the user person (300);
    observing, using at least one sensor, in particular at least one depth sensing device (110), a spatial input area (120) being located essentially in front of the display means (200), and capturing at least one of a position and movement of an input object (301) that the user person (300) uses for providing touchless user input within the spatial input area (120);
    displaying, using the display means (200), a hovering cursor (220) being controlled based on the captured position and movement of the input object (301), wherein the hovering cursor (220) hovers on a currently visible portion of the presented scene (210);
    performing a scrolling operation, using the display means (200), wherein the scrolling operation includes scrolling the scene (210) in a scrolling direction by a scrolling distance when a scrolling condition is met, wherein whether the scrolling condition is met depends on the position and/or movement of the hovering cursor (220).

2.  The computer-implemented method of claim 1, wherein the scrolling distance and the scrolling direction, and preferably a scrolling speed, are defined in a scrolling scheme.

3.  The computer-implemented method of claim 2, wherein the scrolling scheme is at least partially adjustable, in particular, one or more of the following parameters being adjustable: scrolling distance, scrolling speed, scrolling direction.

4.  The computer-implemented method of any one of the preceding claims, wherein the display means comprises an upper edge (201) and a lower edge (202) beyond each of which parts of the hidden portion may be located, wherein scrolling conditions and respective scrolling directions of the scrolling operation are defined as follows:

    if the hovering cursor (220) is moved upwards such that the hovering cursor (220) collides with the upper edge (201) of the display means (200), the scene (210) is scrolled down by the scrolling distance such that a part of the hidden portion beyond the upper edge (201) becomes visible to the user person (300), and
    if the hovering cursor (220) is moved downwards such that the hovering cursor (220) collides with the lower edge (202) of the display means (200), the scene (210) is scrolled up by the scrolling distance such that a part of the hidden portion beyond the lower edge (202) becomes visible to the user person (300);
    or
    if the hovering cursor (220) is moved upwards such that the hovering cursor (220) collides with the upper edge (201) of the display means, the scene (210) is scrolled up by the scrolling distance such that a part of the hidden portion beyond the lower edge (202) becomes visible to the user person (300), and
    if the hovering cursor (220) is moved downwards such that the hovering cursor (220) collides with the lower edge (202) of the display means (200), the scene (210) is scrolled down by the scrolling distance such that a part of the hidden portion beyond the upper edge (201) becomes visible to the user person (300).

5. The computer-implemented method of any one of the preceding claims, wherein the display means (200) comprises a left edge (203) and a right edge (204) beyond each of which parts of the hidden portion may be located, wherein scrolling conditions and respective scrolling directions of the scrolling operation are defined as follows:

if the hovering cursor (220) is moved to the left such that the hovering cursor (220) collides with the left edge (203) of the display means (200), the scene (210) is scrolled to the right by the scrolling distance such that a part of the hidden portion beyond the left edge (203) becomes visible to the user person (300), and
if the hovering cursor (220) is moved to the right such that the hovering cursor (220) collides with the right edge (204) of the display means (200), the scene (210) is scrolled to the left by the scrolling distance such that a part of the hidden portion beyond the right edge (204) becomes visible to the user person (300);
or
if the hovering cursor (220) is moved to the left such that the hovering cursor (220) collides with the left edge (203) of the display means (200), the scene (210) is scrolled to the left by the scrolling distance such that a part of the hidden portion beyond the right edge (204) becomes visible to the user person (300), and
if the hovering cursor (220) is moved to the right such that the hovering cursor (220) collides with the right edge (204) of the display means (200), the scene (210) is scrolled to the right by the scrolling distance such that a part of the hidden portion beyond the left edge (203) becomes visible to the user person (300).

6. The computer-implemented method of any one of the preceding claims, wherein the display means (200) comprises an upper edge (201) and a lower edge (202) beyond each of which parts of the hidden portion may be located, wherein scrolling conditions and respective scrolling directions of the scrolling operation are defined as follows:

if the hovering cursor (220) is moved upwards such that the hovering cursor (220) enters an upper scrolling zone (201a) which is located adjacent to the upper edge (201) of the display means (200), the scene (210) is scrolled down by the scrolling distance such that a part of the hidden portion beyond the upper edge (201) becomes visible to the user person (300), and
if the hovering cursor (220) is moved downwards such that the hovering cursor (220) enters a lower scrolling zone (202a) which is located adjacent to the lower edge (202) of the display means (200), the scene (210) is scrolled up by the scrolling distance such that a part of the hidden portion beyond the lower edge (202) becomes visible to the user person (300);
or
if the hovering cursor (220) is moved upwards such that the hovering cursor (220) enters an upper scrolling zone (201a) which is located adjacent to the upper edge (201) of the display means (200), the scene (210) is scrolled up by the scrolling distance such that a part of the hidden portion beyond the lower edge (202) becomes visible to the user person (300), and
if the hovering cursor (220) is moved downwards such that the hovering cursor (220) enters a lower scrolling zone (202a) which is located adjacent to the lower edge (202) of the display means (200), the scene (210) is scrolled down by the scrolling distance such that a part of the hidden portion beyond the upper edge (201) becomes visible to the user person (300).

7. The computer-implemented method of any one of the preceding claims, wherein the display means (200) comprises a left edge (203) and a right edge (204) beyond each of which parts of the hidden portion may be located, wherein scrolling conditions and respective scrolling directions of the scrolling operation are defined as follows:

if the hovering cursor (220) is moved to the left such that the hovering cursor (220) enters a left scrolling zone (203a) which is located adjacent to the left edge (203) of the display means (200), the scene (210) is scrolled to the right by the scrolling distance such that a part of the hidden portion beyond the left edge (203) becomes visible to the user person (300), and
if the hovering cursor (220) is moved to the right such that the hovering cursor (220) enters a right scrolling zone (204a) which is located adjacent to the right edge (204) of the display means (200), the scene (210) is scrolled to the left by the scrolling distance such that a part of the hidden portion beyond the right edge (204) becomes visible to the user person (300);
or
if the hovering cursor (220) is moved to the left such that the hovering cursor (220) enters a left scrolling zone (203a) which is located adjacent to the left edge (203) of the display means (200), the scene (210) is scrolled to the left by the scrolling distance such that a part of the hidden portion beyond the right edge (204) becomes visible to the user person (300), and
if the hovering cursor (220) is moved to the right such that the hovering cursor (220) enters a right scrolling zone (204a) which is located adjacent to the right edge (204) of the display means (200), the scene (210) is scrolled to the right by the scrolling distance such that a part of the hidden portion beyond the left edge (203) becomes visible to the user person (300).

8. The computer-implemented method of claim 6 or 7, wherein each scrolling zone (201a, 202a, 203a, 204a) is defined as an area extending parallel to its adjacent edge (201, 202, 203, 204), while having a predetermined thickness (d) in a direction orthogonal to its respective edge (201, 202, 203, 204), optionally the thickness (d) being not more than 2 cm, preferably not more than 1.5 cm, preferably not more than 1 cm, preferably equal to 1 cm, and/or the thickness (d) being not more than 12 % of the length of the shortest edge of the display means (200), preferably not more than 9 % of the length of the shortest edge of the display means (200), preferably not more than 6 % of the length of the shortest edge of the display means (200), preferably equal to 6 % of the length of the shortest edge of the display means (200).

9. The computer-implemented method of any one of claims 4-8, wherein a configuration option is provided by the electronic device (100) to adjust the scrolling direction according to user preferences, in particular to invert the scrolling direction.

10. The computer-implemented method of any one of the preceding claims, wherein scrolling stops after the scrolling distance when performing the scrolling operation, wherein for performing a further scrolling operation, a ready-to-scroll condition must be met, wherein the ready-to-scroll condition includes that the respective scrolling condition is temporarily not fulfilled between two successive scrolling operations, preferably the ready-to-scroll condition includes that the hovering pointer (220) leaves the respective edge (201, 202, 203, 204) and/or leaves the respective scrolling zone (201a, 202a, 203a, 204a), optionally for a predefined period of time in which scrolling is blocked.

11. The computer-implemented method of any one of the preceding claims, wherein the scrolling distance for scrolling upwards and/or downwards is set between 40 % and 50 % of the height of the display means (200), and optionally wherein the scrolling distance for scrolling to the left and/or scrolling to the right is set between 40 % and 50 % of the width of the display means (200).

12. The computer-implemented method of any one of the preceding claims, wherein the at least one depth sensing device (110) is a depth camera.

13. An electronic device (100), preferably a mobile device or a tablet device or a laptop device, wherein the electronic device (100) comprises at least one depth sensing device (110), preferably at least two depth sensing devices (110), and wherein the electronic device (100) is configured to perform a method according to any one of the preceding claims.

14. A system or data processing apparatus comprising means for carrying out the method of any one of claims 1-12.

15. A computer program or a computer-readable medium having stored thereon a computer program, the computer program comprising instructions which, when the program is executed by a computer, cause the computer to carry out the method of any one of claims 1-12.

Fig. 1a

Fig. 1b

Fig. 1c

Fig. 2a

Fig. 2b

210 220 300, 301

110 110

## Fig. 3a

Fig. 3b

110

Fig. 4

Europäisches
Patentamt

European
Patent Office

Office européen
des brevets

# EUROPEAN SEARCH REPORT

**Application Number**

EP 23 15 3429

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/298261 A1 (IMOTO HIROYASU [JP] ET AL) 2 October 2014 (2014-10-02) <br> * abstract; figures 1-32 * <br> * paragraphs [0073] – [0105], [0114], [0130] – [0142], [0167], [0195] – [0200] * | 1-15 | INV. <br> G06F3/0485 <br> G06F3/01 <br> G06F3/04812 <br> G06F3/04815 <br> G06F1/16 <br> G06F3/0483 |
| A | US 2014/055395 A1 (KIM KWANG-JU [KR]) 27 February 2014 (2014-02-27) <br> * abstract; figures 1-12B * <br> * paragraphs [0073], [0092], [0095], [0110] – [0113] * | 1,6-8, 13-15 | G06F1/26 <br> H04M1/04 <br> H04M1/72409 |
| A | US 2009/002324 A1 (HARBESON PETER [US] ET AL) 1 January 2009 (2009-01-01) <br> * abstract; figures 1-7 * <br> * paragraphs [0037], [0038] * | 1,4,5, 13-15 | |

**TECHNICAL FIELDS SEARCHED (IPC)**

G06F

The present search report has been drawn up for all claims

| Place of search | Date of completion of the search | Examiner |
|---|---|---|
| Munich | 3 August 2023 | Köhn, Andreas |

## ANNEX TO THE EUROPEAN SEARCH REPORT
## ON EUROPEAN PATENT APPLICATION NO.

EP 23 15 3429

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2023

| Patent document cited in search report | | Publication date | Patent family member(s) | | Publication date |
|---|---|---|---|---|---|
| US 2014298261 | A1 | 02-10-2014 | EP | 2891949 A1 | 08-07-2015 |
| | | | JP | 6062416 B2 | 18-01-2017 |
| | | | JP | WO2014034031 A1 | 08-08-2016 |
| | | | US | 2014298261 A1 | 02-10-2014 |
| | | | WO | 2014034031 A1 | 06-03-2014 |
| US 2014055395 | A1 | 27-02-2014 | KR | 20140026177 A | 05-03-2014 |
| | | | US | 2014055395 A1 | 27-02-2014 |
| US 2009002324 | A1 | 01-01-2009 | CN | 101689092 A | 31-03-2010 |
| | | | EP | 2165251 A1 | 24-03-2010 |
| | | | KR | 20100012088 A | 05-02-2010 |
| | | | US | 2009002324 A1 | 01-01-2009 |
| | | | WO | 2009001240 A1 | 31-12-2008 |

EPO FORM P0459

For more details about this annex : see Official Journal of the European Patent Office, No. 12/82